**Europäisches Patentamt**

**European Patent Office**

**Office européen des brevets**

(19)

(11) Veröffentlichungsnummer : **0 405 176 B1**

(12) ## EUROPÄISCHE PATENTSCHRIFT

(45) Veröffentlichungstag der Patentschrift :
28.10.92 Patentblatt 92/44

(51) Int. Cl.$^5$ : **G01B 11/03**

(21) Anmeldenummer : **90110413.3**

(22) Anmeldetag : **01.06.90**

(54) **Taststift mit einem optischen Berührungssensor.**

(30) Priorität : **24.06.89 DE 3920716**

(43) Veröffentlichungstag der Anmeldung :
**02.01.91 Patentblatt 91/01**

(45) Bekanntmachung des Hinweises auf die
Patenterteilung :
**28.10.92 Patentblatt 92/44**

(84) Benannte Vertragsstaaten :
**CH DE FR GB IT LI SE**

(56) Entgegenhaltungen :
**EP-A- 0 135 000**
**DD-A- 252 233**

(73) Patentinhaber : **Leica Industrieverwaltung
GmbH
Ernst-Leitz-Strasse 30 Postfach 20 20
W-6330 Wetzlar 1 (DE)**

(72) Erfinder : **Ricklefs, Ubbo, Dr.
Dianaburgstrasse 12
W-6349 Greifenstein/Ulm (DE)**

EP 0 405 176 B1

## Beschreibung

Die Erfindung betrifft einen Taststift mit einem optischen Berührungssensor.

Bekannt sind insbesondere zur Verwendung in 3D-Meßmaschinen Taster mit einem Taststift, der beim Berühren eines Meßobjekts eine Auslenkung erfährt, aus der bereits bei möglichst infinitesimaler Auslenkung seines Berührungselements ein Signal abgeleitet wird.

Dabei ist es aus DE-C-2 937 431, US-A-4 453 082 und US-A-4 574 199 bekannt, das Berühren durch ein optisches System nachzuweisen, das eine Lichtquelle, ein mechanisch beeinflußtes optisches Element und einen Lichtdetektor aufweist. Die Lichtquelle erzeugt dabei einen stabilen Lichtstrom, der durch das optische Element abgelenkt oder ausgeblendet wird, so daß Lage und/oder Intensität des danach am Lichtdetektor ankommenden Lichtbündels beeinflußt werden.

Die US-Schriften lehren die Verwendung von Photodioden-Arrays als Lichtdetektoren, wodurch auch eine quantitative Messung der Größe der Auslenkung des Berührungselements - messendes Antasten - ermöglicht wird. Aus der US-A-4 453 082 ist es auch bekannt, daß als Lichtquelle eine Halbleiter-Laserdiode verwendet werden kann.

In der Anordnung nach DE-C-2 937 431 wird durch den Anstoß des Berührungselementes am Meßobjekt ein Spiegel in Schwingungen versetzt. Das hat zur Folge, daß ein stationäres Anliegen oder eine Deformation des Taststifts nicht nachgewiesen werden.

Aus US-A-4 655 597 und T. Yoshino et al., Appl. Optics 26 (1987), 892-897, ist die Messung von Lageveränderungen mit einem Laserdioden-Rückkoppel-Interferometer bekannt. Dabei wird das von einer Laserdiode emittierte Licht von einem Spiegel auf die Laserdiode zurückgelenkt. Der Spiegel wirkt damit als dritter Resonatorspiegel eines Verbundresonators, der zusätzlich noch die beiden Endspiegel der Laserdiode enthält. Eine Lageänderung des dritten Resonatorspiegels gegenüber der Laserdiode bewirkt eine Änderung der Güte dieses Verbundresonators. Das heißt, daß die Lichtemission der Laserdiode von der Lage des dritten Resonators beeinflußt wird. Der Lichtstrom der Laserdiode wird von einer Photodiode erfaßt. Ein Regelkreis regelt den elektrischen Betriebsstrom der Laserdiode auf stabile bzw. stabil modulierte Lichtemission. In einem dargestellten Versuchsaufbau (T. Yoshino et al., a.a.O.) kann damit eine relative Lagemessung über mehrere μm mit linearem Signal erfolgen. Die Auswirkungen von Verkippungen des Spiegels werden in beiden Schriften nicht beschrieben.

Aus R. O. Miles et al., J. Lightwave Technology, Vol. 1, No.1 March 1983, p. 81-93 ist ein optischer Sensor mit Laserdiode und einer externen Nahfeld-Kavität bekannt, bei der der Abstand des externen Reflektors zum Resonator der Laserdiode klein ist gegen dessen Länge, und mit dem in der Ausführung als Beschleunigungssensor auch kleine Verkippungen des externen Reflektors nachgewiesen werden.

Es ist Aufgabe der Erfindung, einen Taststift der eingangs genannten Art mit einem optischen Berührungssensor auszustatten, der besonders hohe Tastempfindlichkeit auch bei stationärer Antastung ermöglicht. Der gesamte Aufbau soll dabei einfach, stabil und funktionssicher sein.

Gelöst wird die Aufgabe bei einem gattungsgemäßen Taststift durch die kennzeichnenden Merkmale des Anspruchs 1. Vorteilhafte Ausgestaltungen sind in den Merkmalen der abhängigen Ansprüche 2 bis 15 angegeben.

Gegenüber der direkten optischen Antastung eines Objekts ergibt sich der Vorteil, daß das optische System gegen Umwelteinflüsse geschützt ist und die optischen Eigenschaften des Objekts keine Rolle spielen. Das Laser-Rückkoppel-Interferometer ist integrierter Bestandteil des Tasters.

Es wurde festgestellt, daß der Abstand des externen Reflektors von der Laserdiode groß sein kann, wodurch der Taster einfach aufzubauen ist. Das Prinzip eignet sich für schaltende und messende Taster.

Die weiteren Vorteile der Erfindung werden anhand der beschriebenen Ausführungsbeispiele erläutert. Dies geschieht anhand der Zeichnung. Es zeigen:

Fig. 1 einen erfindungsgemäßen Taststift für 3D-Meßmaschinen,

Fig. 2 ein Beispiel, bei dem die Taststiftlänge und die Resonatorlänge unabhängig voneinander sind,

Fig. 3 ein Beispiel, das besonders für auswechselbare Taststifte geeignet ist,

Fig. 4 ein Beispiel, bei dem der sprunghafte Wechsel von Laser zu Fluoreszenzbetrieb genutzt wird, um einen Schwellwertschalter zu bilden.

Fig. 5 ein Beispiel mit einer Linse im Strahlengang und mit der Anordnung des Resonatorspiegels an der Basis des Taststifts,

Fig. 6 ein Beispiel mit einem Lichtwellenleiter im Strahlengang,

Fig. 7 einen Taststift im Baukastensystem mit Steckverbindungen und Verzweigungen für Lichtwellenleiter.

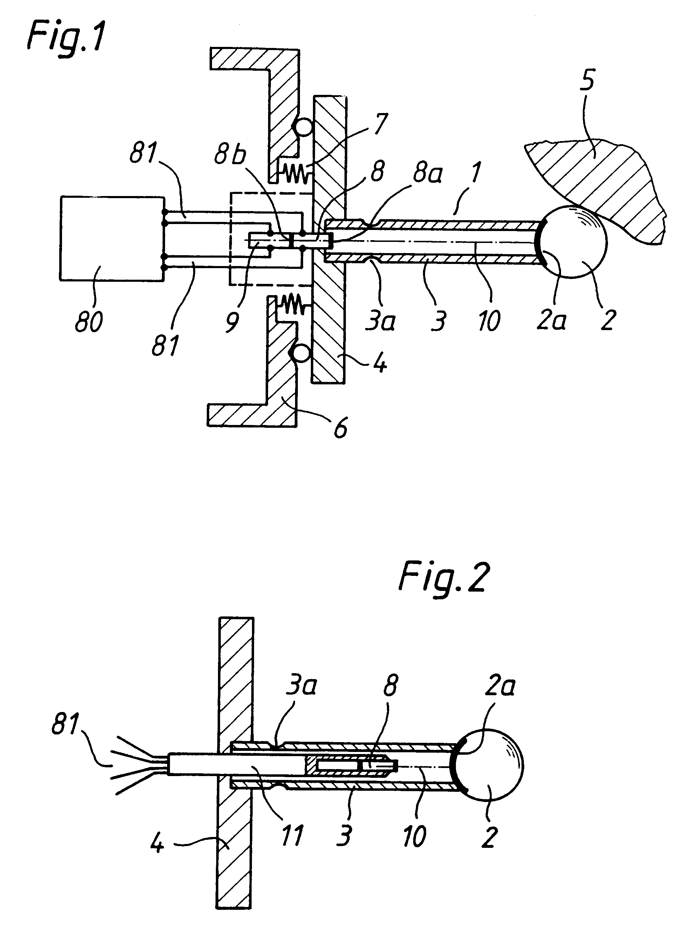

Fig. 1 zeigt zunächst einen Taststift 1, wie er als schaltender Taststift bei 3D-Meßmaschinen gebräuchlich ist. Er hat ein Berührungselement 2 - typischerweise eine polierte Saphirkugel - einen Balken 3 und eine Basis 4.

Um die Kräfte zwischen Kugel 2 und einem Meßobjekt 5 zu beschränken, ist die Basis 4 in einem Kipplager 6 gelagert und wird dort durch Haltefedern 7 in der Ruhelage fixiert.

Erfindungsgemäß wird ein Laser 8 in der Basis 4 angeordnet, der Balken 3 als hohles Rohr ausgeführt und der in diesem liegende Bereich der Kugel 2 als Spiegel 2a genutzt.

Erster und zweiter Endspiegel 8a,8b des Lasers 8 und der Spiegel 2a als dritter Resonatorspiegel bilden einen gekoppelten Laserresonator. Die Laserleistung wird von einer Monitor-Photodiode 9, die hinter dem äußeren Laserspiegel 8b angeordnet ist, gemessen.

Ändert sich die Relativlage vom Spiegel 2a zur Laserdiode 8 durch Verschieben oder Verkippen, dann wird die Rückkopplung und gleichbedeutend die Güte des gekoppelten Laserresonators verändert. Dies kann als Änderung des Strahlungsstroms von der Photodiode 9 nachgewiesen werden. Als Laser 8 wird vorzugsweise eine Laserdiode 8 verwendet. Geeignete Laserdioden 8 und Monitor-Photodioden 9 sind als komplette Einheit handelsüblich (z.B. Hitachi HL 7806, Sharp LT 030 MD/MF). Es ändert sich aber auch der elektrische Widerstand der Laserdiode 8 mit der Resonatorgüte, so daß auch dieser ausgewertet werden kann. Auf die Photodiode 9 kann dann verzichtet werden. Eine elektronische Schaltung 80 mit Anschlüssen 81 dient zur Stromversorgung und Auswertung.

Zur feinen Messung der Resonatorgüte kann auch die Wellenlänge der Laserdiode 8 durch Strom und/oder Temperatur derselben moduliert werden.

Da nur ein geringer Teil des Lichtstroms aus der Laserdiode 8 durch den Spiegel 2a reflektiert werden muß, um den o.g. Effekt zu erhalten, kann die ohnehin als Berührungselement 2 vorteilhafte polierte Saphirkugel ohne weitere Bearbeitung auch als Spiegel 2a genutzt werden.

Das als Balken 3 verwendete Rohr kann sehr dünn und leicht sein, da es nur den engen Laserstrahl 10 umhüllt und vorzugsweise nicht starr sein soll, um bei kleinster Kraft zwischen Berührungselement 2 und Objekt 5 eine nachweisbare Lageänderung des Spiegels 2a zu bewirken. Dazu weist es vorteilhaft nahe der Basis 4 eine Biegestelle 3a auf.

Das Innere des Rohrs kann mit einer definierten Atmosphäre oder Vakuum versehen werden, um Einflüsse von Staub, Feuchtigkeit, Druck- und Dichteschwankungen auf den Laserresonator auszuschliessen.

Fig. 2 zeigt eine Anordnung, bei der die Länge des Balkens 3, des Taststifts 1 und die Länge des Laserresonators entkoppelt sind. Die Laserdiode 8 ist auf einem starren Träger 11 an der Basis 4 befestigt und ragt in das Rohr bis nahe an den Spiegel 2a hinein. Bei kleiner Resonatorlänge ergeben sich so große spezifische Auslenkungen des Spiegels 2a relativ zur Laserdiode 8. Da im Beispiel ihr Innenwiderstand gemessen wird, kann eine Photodiode 9 (Fig. 1) entfallen.

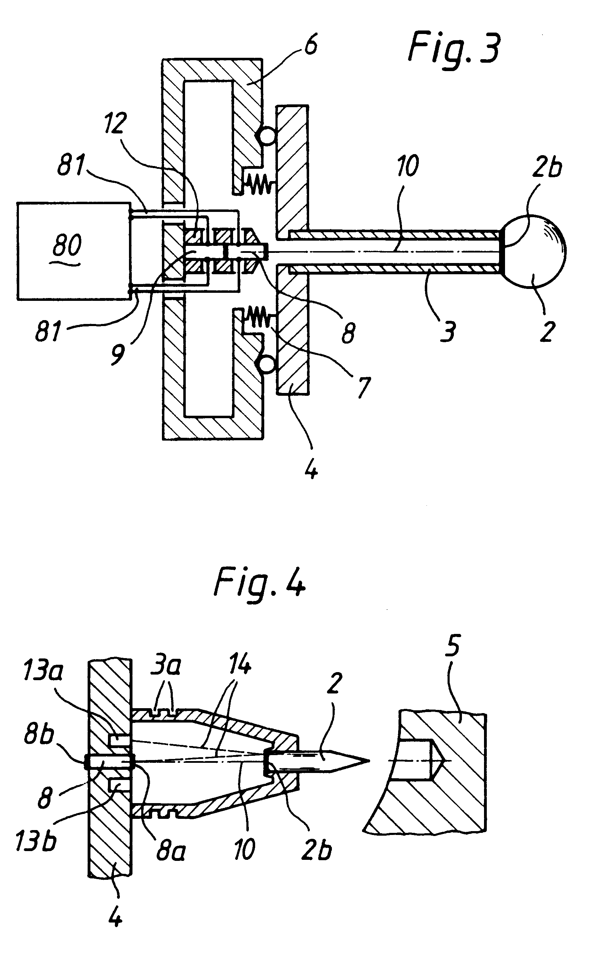

Das Beispiel der Fig. 3 zeigt eine Ausführung, die sich besonders für auswechselbare Taststifte eignet. Laser 8 und Monitor-Photodiode 9 sind mit einer Halterung 12 mit dem Kipplager 6 verbunden nahe der Basis 4 und in Verlängerung des hohlen Balkens 3 des Taststifts 1 angeordnet. Der Taststift 1 enthält also keine aktiven Bauelemente und ist daher besonders kostengünstig als auswechselbares Teil herzustellen. Zusätzlich können mit dieser Anordnung Dejustierungen der Grundstellung des Taststifts 1 im Kipplager 6 nachgewiesen werden.

Weiter ist gezeigt, daß das Berührungselement 2 auch mit einem besonders ausgeführten Spiegel 2b versehen sein kann, der für das optische System optimiert ist. Beispielsweise kann ein Planspiegel 2b mit besonderer Beschichtung vorgesehen werden. Die Justierung von Laserdiode 8 und Planspiegel 2b ist dabei vereinfacht, der Herstellaufwand für den Spiegel 2b aber erhöht.

Fig. 4 zeigt eine Anordnung der Laserdiode 8 in der Basis 4 des Tasters 1, des Planspiegels 2b am Berührungselement 2, das hier als Zylinder/Kegel-Kombination dargestellt ist, und von Monitor-Photodioden 13a und 13b seitlich neben der Laserdiode 8, die Licht nachweisen, das den Weg von der Laserdiode 8 über den Spiegel 2b zu den Photodioden 13a, 13b genommen hat.

Der optische Aufbau sieht also zunächst wie eine gewöhnliche Reflexlichtschranke aus. Sind die Photodioden 13a,13b Teil eines ringförmigen Arrays, dann kann man entsprechend US-PS 4 574 199 aus der Lage des Reflexes auf dem Photodiodenarray die Achse der Kippung zwischen Spiegel 2b und Laserdiode 8 entnehmen.

Erfindungsgemäß wird nun die Anordnung der Laserdiode 8 mit ihren Endspiegeln 8a und 8b und des Spiegels 2b als gekoppelter Laserresonator mit drei Spiegeln ausgeführt. Dazu werden in der Grundstellung die Resonatorgüte und die Betriebsbedingungen der Laserdiode 8 wie Strom und Temperatur so gewählt, daß gerade die Schwelle für die Laser-Lichtemission überschritten wird.

Der Laserstrahl 10 ist eng gebündelt, so daß praktisch kein Licht auf die Photodioden 13a/b fallen kann.

Wird der Spiegel 2b um einen bestimmten Winkel gekippt, so vermindert sich die Güte des Resonators, wodurch die Laserdiode 8 in den Fluoreszenzbetrieb übergeht und nun Fluoreszenzlicht 14 relativ hoher Divergenz emittiert.

Auf einer durch die Kipprichtung des Spiegels 2b festgelegten Photodiode 13a fällt daher eine erhebliche Lichtintensität ein. Die Anordnung wirkt also als Schwellwertschalter.

Solange durch Lageänderungen des Spiegel 2b die Schwelle für Laserlichtemission nicht unterschritten wird, kann diese Anordnung wie die nach Fig. 1 arbeiten und die Resonator-Güteänderung kann durch den elektrischen Erregerstrom der Laserdiode 8 oder durch eine zusätzliche Monitor-Photodiode erfaßt werden. Wegen des divergenten Lichtstrahlengangs zu den Photodioden 13a,13b muß der hohle Balken 3 gegenüber den Ausführungen der Fig. 1 bis Fig. 3 weiter sein.

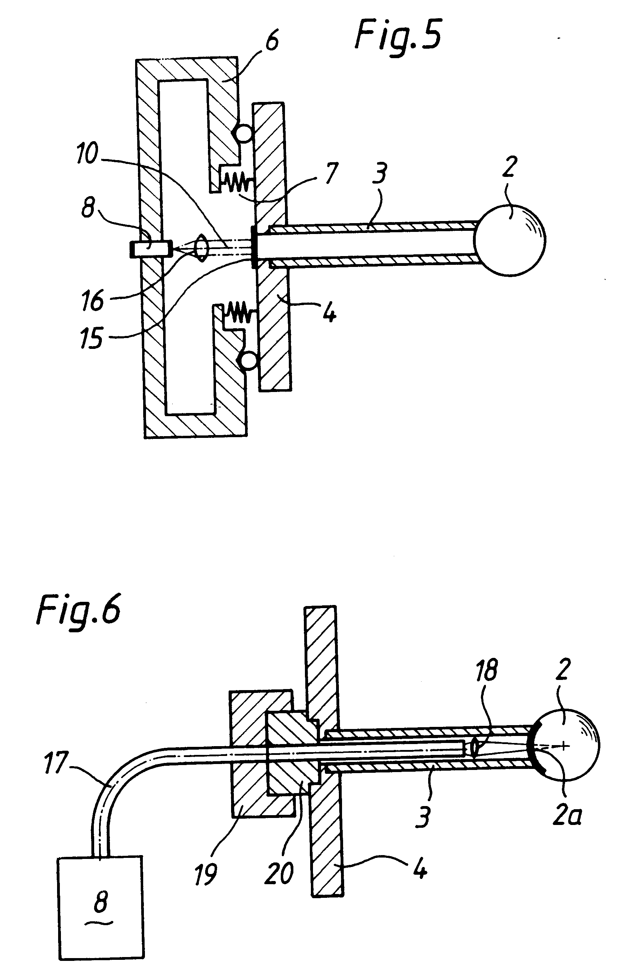

Fig. 5 zeigt in Abwandlung der Fig. 3 beispielhaft, daß der dritte Resonatorspiegel 15 auch vom Berührungselement 2 getrennt werden kann. Dazu sind bekannte steife Taststiftkonstruktionen erfindungsgemäß abzuwandeln. Der Resonatorspiegel 15 wird dabei an der Basis 4 des Taststifts 1 angebracht. Zusätzlich wird die Verwendung einer Linse 16 im Strahlengang des Laserstrahls 10 gezeigt, so daß die Divergenz des von der Laserdiode 8 emittierten Lichts verringert und die Rückkopplung verbessert werden kann. Besonders vorteilhaft ist dabei die Verwendung von Linsenelementen 16 mit Brechungsindex-Gradienten.

In Fig. 6 ist in den Strahlengang zwischen der Laserdiode 8 und dem dritten Resonatorspiegel 2a am Berührungselement 2 ein Lichtwellenleiter 17 eingesetzt.

Wird dieser im Bereich des Balkens 3 freistehend starr ausgeführt, dann werden die Vorteile der Anordnung nach Fig. 2 erreicht, die aktiven Bauteile Laserdiode 8 und eventuell Fotodiode 9 können aber wie bei Fig. 3 auf das Kipplager 6 zurückgezogen werden. Bei Auswahl eines geeigneten Lichtwellenleiters 17, z.B. einer Monomodefaser, kann die Laserdiode 8 im Extremfall bis in den Steuerschrank der kompletten 3D-Meßmaschine, an der der Taststift 3 angebracht ist, zurückgezogen werden. Damit lassen sich z.B. elektromagnetische Störungen unterdrücken.

Dargestellt ist in Fig.6 auch die Anordnung eines Linsenelements 18 zwischen dem Lichtwellenleiter 17 und dem dritten Resonatorspiegel 2a. Damit kann, wie dargestellt, das austretende Licht auf den Kugelmittelpunkt der den Resonatorspiegel 2a bildenden Kugel des Berührungselements 2 fokussiert werden, so daß das Licht senkrecht auf die Spiegeloberfläche trifft.

Weiter ist gezeigt, daß der Lichtwellenleiter 17 mit Stecker 19 und Buchse 20 handelsüblicher Bauart versehen sein kann. Dann kann der ganze Taststift einfach ausgewechselt werden.

Der Lichtwellenleiter 17 kann auch die gesamte Länge zwischen Laser 8 und drittem Resonatorspiegel 2a, 2b ausfüllen, also z.B. an Stelle des Hohlraums im Balken 3 der Fig. 1 treten und so Lichtverluste reduzieren. Dann kann vielfach auf Linsenelemente 16,18 verzichtet werden, besonders wenn Gradientenindexfasern als Lichtwellenleiter 17 verwendet werden. Berührt das Antastelement 2 ein Objekt 5, dann wird in diesem Fall der Lichtwellenleiter 17 gebogen oder gestaucht. Bei Ausführungen des Lichtwellenleiters 17, die darauf mit Änderungen der optischen Eigenschaften, z. B. der Dämpfung, oder der Polarisationseigenschaften, reagieren, verstärken diese Änderungen die Güteänderung des Resonators beim Antasten.

Um unterschiedliche Antastgeometrien zu ermöglichen, werden Taststifte 1 vielfach in einem Baukastensystem mit einer Basis 4, verschiedenen Balkenelementen 3b, Berührungselementen 2 und Verzweigungs- und Winkelstücken ausgeführt. Die einzelnen Elemente werden dann für eine bestimmte Meßaufgabe passend zusammengefügt.

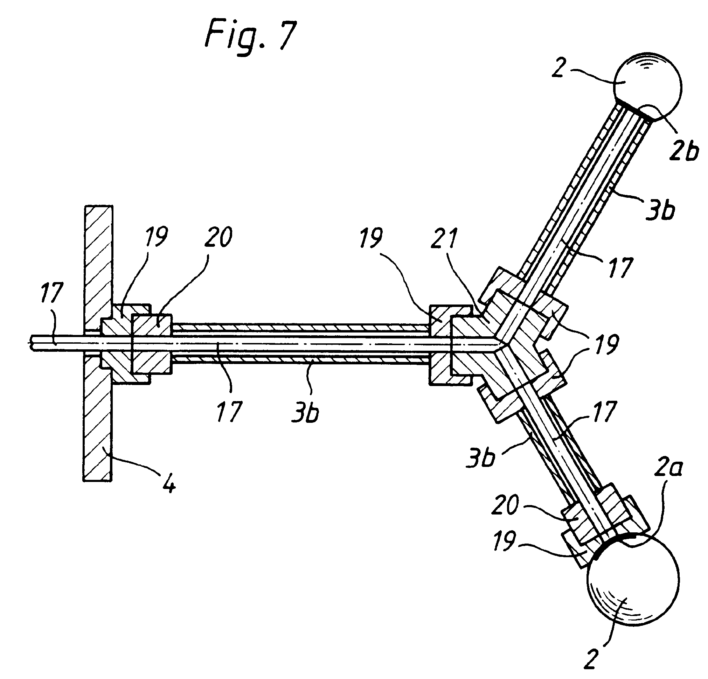

Dies kann auch bei einem erfindungsgemäßen Taststift 1 realisiert werden, wie das Beispiel Fig. 7 zeigt.

Dabei sind Basis 4 und Balkenelement 3b versehen mit Lichtwellenleitern 17 und Verbindungselementen, ausgeführt als Lichtwellenleiter-Stecker 19 und -Buchse 20. Berührungslemente 2 mit den dritten Resonatorspiegeln 2a, 2b können direkt an Balkenelementen 3b befestigt sein oder ebenfalls mit Steckern 19 versehen sein. Zusammen mit Verzweigungselementen 21 für Lichtwellenleiter 17, die zugleich als mechanische Verzweigungselemente für die Balkenelemente 3b ausgebildet sind, lassen sich dann alle benötigten Taststiftkonfigurationen realisieren.

Die dargestellen erfindungsgemäßen Taststifte sind nur Beispiele. Insbesondere können Merkmale aus verschiedenen Figuren untereinander kombiniert werden.

Die zum Betrieb eines erfindungsgemäßen Tasters nötigen elektronischen Schaltungen 80 und Anschlüsse 81 (Fig. 1) werden nicht näher beschrieben, da sie z.B. aus dem angegebenen Stand der Technik bekannt sind und für die Anforderungen in einer 3D-Meßmaschine leicht adaptiert werden können.

Die Anwendung des erfindungsgemäßen Taststifts ist aber nicht auf 3D-Meßmaschinen beschränkt, vielmehr kann er ganz allgemein als empfindlicher taktiler Sensor verwendet werden.

**Patentansprüche**

1. Taststift (1) mit einem Berührungselement (2) und mit einem optischen Berührungssensor, **dadurch gekennzeichnet**, daß der Berührungssensor als Laser-Rückkoppel-Interferometer (8,8a,8b,2a) aufgebaut ist, dessen externer Spiegel (2a) starr mit dem Berührungselement (2) gekoppelt ist, so daß dessen Resonatorgeometrie und Resonatorgüte durch vom Antastvorgang bedingte Lageänderungen des Berührungselements (2) verändert wird.

2. Taststift nach Anspruch 1, **dadurch gekennzeichnet**, daß eine Einrichtung zur Messung des von der Resonatorgüte abhängigen Strahlungsstromes des Lasers (8) vorgesehen ist.

3. Taststift nach Anspruch 1, **dadurch gekennzeichnet**, daß eine Laserdiode (8) als Laser eingesetzt ist und Einrichtung zur Messung des von der Resonatorgüte abhängigen Innenwiderstandes der Laserdiode (8) vorgesehen ist.

4. Taststift nach Anspruch 1, **dadurch gekennzeichnet**, daß das Laser-Rückkoppel-Interferometer (8,8a, 8b,2a) im Bereich der Schwelle zwischen Fluoreszenz und Laser-Aktivität des Lasers betrieben wird.

5. Taststift nach Anspruch 1, **dadurch gekennzeichnet**, daß Detektoren (13a,13b) für das Streulicht der Anordnung vorgesehen sind und die sprunghafte Zunahme der Streuintensität unter großen Winkeln zur Laserstrahlachse beim Übergang vom Laserbetrieb zur Fluoreszenz aufgrund schlechter werdender Güte nachgewiesen wird.

6. Taststift nach Anspruch 1, **dadurch gekennzeichnet**, daß der Taststift (1) aus einem Berührungselement (2), einem Balken (3) und einer Basis (4) besteht, und daß der Basis (4) ein Laser (8) mit Endspiegeln (8a,8b) zugeordnet ist und an dem Berührungselement (2) ein Spiegel (2a) starr angeordnet ist, wobei der Spiegel (2a) als ein externer dritter Resonatorspiegel eine Selbstrückkopplung des Lasers (8) bewirkt, so daß eine durch die Antastung bedingte Lageänderung des Berührungselements (2) die Güte des Resonators aus dem Laser (8) mit Endspiegeln (8a,8b) und dem Spiegel (2a) verändert.

7. Taststift nach Anspruch 6, **dadurch gekennzeichnet**, daß der Taststift (1) aus einem hohlen Rohr als Balken (3) und einer an einem Ende befestigten Tastkugel als Berührungselement (2) aufgebaut ist und die zum Hohlraum des Rohrs weisende Fläche der Tastkugel (2) als Spiegel (2a) genutzt wird.

8. Taststift nach Anspruch 6 , **dadurch gekennzeichnet**, daß der Laser (8) an der Basis (4) des Taststifts (1) befestigt ist.

9. Taststift nach Anspruch 6, **dadurch gekennzeichnet**, daß der Taststift (1) mit seiner Basis (4) in einem Kipplager (6) beweglich gelagert ist und der Laser (8) im Bereich der Basis (4) des Taststifts (1) am Kipplager (6) befestigt ist.

10. Taststift nach Anspruch 1, **dadurch gekennzeichnet**, daß der Taststift (1) aus einem Berührungselement (2), einem starren Balken (3) und einer Basis (4) besteht, daß der Taststift in einem Lager (6) beweglich gelagert ist und daß der externe dritte resonatorspiegel (15) der Laser-Rückkoppel-Interferometers an der Basis (45) befestigt ist.

11. Taststift nach Anspruch 1 **gekennzeichnet durch** die Anordnung eines Lichtwellenleiters 17 im Laser-Rückkoppel-Interferometer.

12. Taststift nach Anspruch 1 **gekennzeichnet durch** die Anordnung eines gradientenoptischen Bauelements im Laser-Rückkoppel-Interferometer.

13. Taststift nach Anspruch 1 **gekennzeichnet durch** die Anordnung polarisationsoptischer Elemente im Laser-Rückkoppel-Interferometer.

14. Taststift nach Anspruch 1, **dadurch gekennzeichnet**, daß der Taststift (1) nach einem Baukastensystem mit unterschiedlichen, auch verzweigten Balkenelementen (3b) und unterschiedlichen, auch mehreren, Berührungselementen (2) ausgestattet werden kann, wobei die Balkenelemente (3b) mit Lichtwellenleitern (17) und Lichtwellenleiter-Kupplungen (19,20) und -Verzweigungen (21) versehen sind und wobei die Berührungselemente (2) mit Resonatorspiegeln (2a,2b) versehen sind.

15. Taststift nach Anspruch 1, **dadurch gekennzeichnet**, daß zur Messung der Resonatorgüte Strom und/oder Temperatur und damit die Wellenlänge der Laserdiode moduliert wird.

## Claims

1. Feeler pin (1) with a contact element (2) and with an optical contact sensor, characterised thereby, that the contact sensor is built up as laser-feedback interferometer (8, 8a, 8b, 2), the external mirror (2a) of which is rigidly coupled with the contact element (2) so that its resonator geometry and resonator Q-factor is varied by positional changes of the contact element (2), which are caused by the scanning operation.

2. Feeler pin according to claim 1, characterised thereby, that an equipment is provided for the measurement of the radiation flux, which is dependent on the resonator Q-factor, of the laser (8).

3. Feeler pin according to claim 1, characterised thereby, that a laser diode (8) is used as laser and an equipment is provided for the measurement of the internal resistance, which is dependent on the resonator Q-factor, of the laser diode (8).

4. Feeler pin according to claim 1, characterised thereby, that the laser-feedback interferometer (8, 8a, 8b, 2a) is operated in the region of the threshold between fluorescence and laser activity of the laser.

5. Feeler pin according to claim 1, characterised thereby, that detectors (13a, 13b) are provided for the stray light of the arrangement and the steplike increase in the stray intensity at large angles to the laser beam axis is detected by reason of the Q-factor becoming poorer during the transition from laser operation to fluorescence.

6. Feeler pin according to claim 1, characterised thereby, that the feeler pin (1) consists of a contact element (2), a stem (3) and a base (4) and that the base (4) is associated with a laser (8) with end mirrors (8a, 8b) and a mirror (2a) is rigidly arranged at the contact element (2), wherein the mirror (2a) as an external third resonator mirror causes a self-feedback of the laser (8) so that a positional change of the contact element (2) caused by the scanning varies the Q-factor of the resonator formed by the laser (8) with end mirrors (8a, 8b) and the mirror (2a).

7. Feeler pin according to claim 6, characterised thereby, that the feeler pin (1) is built up from a hollow tube as stem (3) and a feeler ball fastened at one end as contact element (2) and that surface of the feeler ball (2), which points towards the hollow space of the tube, is used as mirror (2a).

8. Feeler pin according to claim 6, characterised thereby, that the laser (8) is fastened at the base (4) of the feeler pin (1).

9. Feeler pin according to claim 6, characterised thereby, that the feeler pin (1) is borne by its base (4) to be movable in a rocker bearing (6) and the laser (8) is fastened at the rocker bearing (6) in the region of the base (4) of the feeler pin (1)..

10. Feeler pin according to claim 1, characterised thereby, that the feeler pin (1) consists of a contact element (2), a rigid stem (3) and a base (4), that the feeler pin is borne to be movable in a bearing (6) and that the external third resonator mirror (15) of the laser feedback interferometer is fastened at the base (4).

11. Feeler pin according to claim 1, characterised by the arrangement of an optical conductor (17) in the laser feedback interferometer.

12. Feeler pin according to claim 1, characterised by the arrangement of a gradient-optical component in the laser feedback interferometer.

13. Feeler pin according to claim 1, characterised by the arrangement of polarisation-optical elements in the laser feedback interferometer.

14. Feeler pin according to claim 1, characterised thereby, that the feeler pin (1) can be equipped according to a kit system with different and also branched stem elements (3b) and with different and also several contact elements (2), wherein the stem elements (3b) are provided with optical conductors (17) and with optical conductor couplings (19, 20) and optical conductor branchings (21) and wherein the contact elements (2) are provided with resonator mirrors (2a, 2b).

15. Feeler pin according to claim 1, characterised thereby, that current and/or temperature and thereby the wavelength of the laser diode are modulated for the measurement of the resonator Q-factor.

## Revendications

1. Goupille de palpage (1) comprenant un élément de contact (2) et un détecteur optique de contact, caractérisée en ce que le détecteur de contact est réalisé sous forme d'interféromètre laser à rétroaction (8, 8a, 8b, 2a) dont le miroir externe (2a) est accouplé rigidement à l'élément de contact (2) de façon que la géométrie de résonance et l'acuité ou la qualité résonnante soient modifiées par des changements de position de l'élément de contact (2) provoqué par l'opération d'approche en vue de la palpation.

2. Goupille de palpage selon la revendication 1, caractérisée en ce qu'est prévu un dispositif pour la mesure du courant de rayonnement du laser (8) qui dépend de l'acuité de résonance.

3. Goupille de palpage selon la revendication 1, caractérisé en qu'on utilise une diode laser (8) comme laser, et en ce qu'il est prévu un dispositif pour la mesure de la résistance interne de la diode laser (8) qui dépend de l'acuité de résonance.

4. Goupille de palpage selon la revendication 1, caractérisée en ce que l'interféromètre laser à rétroaction (8, 8a, 8b, 2a) est amené à fonctionner au voisinage du seuil entre la fluorescence et l'activité laser du laser.

5. Goupille de palpage selon la revendication 1, caractérisée en ce que des détecteurs (13a, 13b) sont prévus pour la lumière parasite du dispositif et que l'augmentation brusque de l'intensité de dispersion à des angles importants par rapport à l'axe du faisceau laser est démontrée lors du passage du fonctionnement laser à la fluorescence du fait d'une acuité diminuante.

6. Goupille de palpage selon la revendication 1, caractérisée en ce que le goupille de palpage (1) est constituée d'un élément de contact (2) , d'une barre et d'une base (4), et en ce qu'un laser (8) présentant des miroirs extrêmes (8a, 8b) est associé à la base (4) et qu'un miroir (2a) est monté fixe sur l'élément de contact (2), le miroir (2a) en tant que troisième miroir de résonance externe, produit une auto-rétroaction du laser (8), de façon qu'une modification de position provoquée par l'approche en vue de la palpation de l'élément de contact (2) modifie l'acuité du résonateur formée par le laser (8) avec les miroirs extrêmes (8a, 8b) et le miroir (2a).

7. Goupille de palpage selon la revendication 6, caractérisée en ce que le goupille de palpage 1 est constituée d'un tube creux formant barre (3) et d'une sphère palpeuse formant élément de contact (2) fixée à une extrémité, et que la surface dirigée vers l'espace creux du tube de la sphère palpeuse (2) est utilisée comme miroir (2a).

8. Goupille de palpage selon la revendication 6, caractérisée en ce que le laser (8) est fixé sur la base (4) du goupille de palpage (1).

9. Goupille de palpage selon la revendication 6, caractérisé en ce que le goupille de palpage (1) est montée mobile par sa base (4) sur un palier à bascule (6), et que le laser (8) est fixé au voisinage de la base (4) du goupille de palpage (1) sur le palier à bascule (6).

10. Goupille de palpage selon la revendication 1, caractérisée en ce que le goupille de palpage (1) est constituée d'un élément de contact (2) d'une barre rigide (3) et d'une base (4), que le goupille de palpage est montée mobile dans un palier (6), et que le troisième miroir résonnant externe (15) de l'interféromètre laser à rétroaction est fixé sur la base (4).

11. Goupille de palpage selon la revendication 1, caractérisée par la disposition d'un guide d'ondes lumineuses (17) dans l'interféromètre laser à rétroaction.

12. Goupille de palpage selon la revendication 1, caractérisée par la disposition d'un élément de construction optique à gradient dans l'interféromètre laser à rétroaction.

13. Goupille de palpage selon la revendication 1, caractérisée par la disposition d'éléments optiques de polarisation dans l'interféromètre laser à rétroaction.

14. Goupille de palpage selon la revendication 1, caractérisée en ce que le goupille de palpage 1 peut être équipée suivant une conception par bloc-éléments comprenant des éléments de barre différents, également ramifiés (3b) et des éléments de contact différents, également plusieurs, les éléments de barre (3b) étant pourvus de guides d'ondes lumineuses (17) et d'accouplement de guides d'ondes lumineuses (19, 20) et des ramifications (21), et les éléments de contact (2) étant pourvus de miroirs résonnants (2a, 2b).

15. Goupille de palpage selon la revendication 1, caractérisée en ce que, pour la mesure de l'acuité de résonance, on module le courant et/ou la température et ainsi la longueur d'onde de la diode laser.

Fig.1

Fig.2

_Fig. 3_

_Fig. 4_

## Fig.5

## Fig.6

## Fig. 7